# EUROPEAN PATENT APPLICATION

(11) **EP 2 156 878 A1**
(43) Date of publication of application: **24.02.2010**
(21) Application number: 08252673.2
(22) Date of filing: 12.08.2008
(51) Int. Cl.: B01D 53/60

(54) **Scrubbing system**

(71) Applicant: BP Alternative Energy International Limited, Chertsey Road Sunbury on Thames, Middlesex TW16 7BP (GB)
(72) Inventor: The designation of the inventor has not yet been filed
(74) Representative: Ford, Louise Diane

(57) **Abstract**

A method of removing nitrogen oxides and sulphur oxides from a flue gas emitted by an oxyfuel combustion process comprises the steps of:
(v) supplying a flue gas from an oxyfuel combustion process, the flue gas comprising nitrogen oxides and sulphur oxides contaminants;
(vi) oxidising nitric oxide present in the flue gas to form nitrogen dioxide;
(vii) contacting the flue gas with a solution comprising water and ammonia to produce ammonium sulphate, ammonium nitrate and an exhaust gas substantially free of nitrogen oxides and sulphur oxides; and
(viii) separating the exhaust gas, the ammonium sulphate and the ammonium nitrate produced in step (iii) from the solution comprising water and ammonia.

## Description

This invention relates to a method of scrubbing NOx and/or SOx impurities from a flue gas stream emitted by an oxyfuel combustion process.

An oxyfuel combustion process is one in which a fuel is burned in the presence of an oxygen-enriched gas rather than in the presence of air. The oxygen-enriched gas can be obtained by removing a significant proportion of the nitrogen from the air. Typically, the oxygen-enriched gas can have an oxygen concentration of at least 75% by volume, often at least 90% by volume. Flue gas from the oxyfuel combustion process is sometimes recycled to the combustion process to alter the concentration of oxygen.

Oxyfuel combustion processes have been proposed for use in pulverised coal-fired power stations. The flue gas typically contains carbon dioxide, water, NOx, SOx and some excess oxygen i.e. oxygen that was not consumed in the boiler and so remains in the flue gas. NOx refers to nitrogen oxide compounds, including nitric oxide (NO) and nitrogen dioxide (N02). SOx refers to sulphur oxide compounds, including sulphur dioxide (S02) and sulphur trioxide (S03).

The concentration of carbon dioxide in a flue gas stream emitted by an oxyfuel combustion process is significantly greater than the concentration of carbon dioxide in a flue gas stream emitted by an air-fired combustion process. The carbon dioxide concentration in the flue gas stream from an oxyfuel process is typically over 75%.

Due to the concentrated nature of the carbon dioxide in the flue gas stream from an oxyfuel combustion process, there are proposals for using the flue gas in enhanced oil recovery processes. Simple storage of the gas in a geological formation has also been contemplated.

US 2007/122328 discloses a method of removing S02 and/or NOx from gaseous CO2 at elevated pressure(s) in the presence of molecular oxygen and water and, when S02 is to be removed, NOx, to convert S02 to sulphuric acid and/or NOx to nitric acid. The sulphuric acid and/or nitric acid is/are then removed from the gaseous carbon dioxide by drawing off the liquids to produce S02-free, NOx-lean carbon dioxide gas. The invention has particular application in the removal of S02 and/or NOx from carbon dioxide flue gas produced in an oxyfuel combustion process, for example, in a pulverized coal fired power station. A similar process is disclosed in "Purification of Oxyfuel-Derived CO2 for Sequestration or Enhanced Oil Recovery", White et al, GHGT-8 (8th International Conference on Greenhouse Gas Control Technologies), 19-22 June 2006.

The process described in US 2007/122328 involves a series of reactions which convert S02 and NOx into sulphuric acid and nitric acid as follows:

NO +½O₂ ↔ NO₂ [1]

2NO₂ ↔ N₂O₄ [2]

2NO₂ + H₂O ↔ HNO₂ + HNO₃ [3]

3HNO₂ ↔ HNO₃ + 2NO + H₂O [4]

NO₂ + SO₂ ↔ NO + SO₃ [5]

SO₃ + H₂O ↔ H₂SO₄ [6]

It is said that the rate of reaction [1] does not become useful until the pressure has increased to at least about 3bar, preferably from about 10bar to about 50bar. Also, a hold up time of no more than 60seconds is included in the process, to allow sufficient contact time after elevation of the pressure of the impure CO2. The hold up is achieved using at least one counter-current gas/liquid contact device, such as columns or scrub towers.

In one arrangement disclosed, the impure CO2 gas is fed to a first compressor where its pressure is increased to about 15bar. The gas is then cooled to about 30°C before being passed to a first gas/liquid contacting column. The gas comes into contact with a counter-flowing water stream in the column. Sufficient residence time is provided in the column to allow NO to be converted to NO2 (reaction [1]). The NO2 is used up quickly in the conversion of SO₂ to H₂SO₄, in accordance with reactions [5] and [6]. This dilute sulphuric acid is removed from the contacting column.

Reactions [5] and [6] are fast processes whereas reaction [3] is slower, and so the conversion of S02 to H2SO4 occurs preferentially over the conversion of NO2 to HN03. Although some HN03 may form in the contacting column if the level of S02 is low, most of the NOx is not removed at this stage.

The carbon dioxide gas leaving the first contacting column is S02 free, and may have a reduced concentration of NOx. The gas is passed to a second compressor where its pressure is increased to about 30bar. The gas is then cooled again and is fed to a second gas/liquid contacting column. Some conversion of NO to NO2 in accordance with reaction [1] may occur during the second cooling stage, and this conversion continues in the second contacting column. The NO2 is then converted to HN03 in accordance with reactions [3] and [4], thereby producing dilute nitric acid which is removed from the contacting column.

The gas leaving the second contacting column is said to be S02-free and NOx-lean.

Although this process can remove S02 and NOx relatively effectively, the dilute nitric and sulphuric acid products are difficult to handle and difficult to dispose of. In view of this, large scale use of this process would pose significant problems, which renders it unsuitable to treat the very large volumes of carbon dioxide gas which are produced globally in today's power stations.

Other scrubbing techniques are known in the art, and much investigation has been carried out into methods of scrubbing impurities such as S02 and NOx from flue gas streams from conventional combustion processes, for example from conventional coal-fired power plants. WO 03/050039 discloses one such technique, for removing S02, NO and N02 from a flue gas stream, especially from a flue gas stream from a fossil fuel boiler. The technique involves oxidising NO to NO2, scrubbing S02, NO and NO2 from the flue gas stream with an ammonia scrubbing solution having a pH between 6 and 8 and removing any ammonia aerosols generated by the scrubbing steps with an aerosol removal means. The oxidising step is carried out by injecting ClO2, 03 or certain organic compounds, or using an electrical barrier discharge (EBD) reactor such as a corona reactor, pulsed corona reactor, electron beam reactor or a dielectric barrier discharge (DBD) reactor.

The chemical reactions involved in the process are as follows:

NH₃ + H₂O + SO₂ → NH₄HSO₃ [7]

NH₄HSO₃ + NH₃ → (NH₄)₂SO₃ [8]

2NH₄OH + SO₂ → (NH₄)₂SO₃ + H₂O [9]

2NO₂ + 4(NH₄)₂SO₃ → 4(NH₄)₂SO₄ + N₂ [10]

NO + NO₂ + 3(NH₄)₂SO₃ → 3(NH₄)₂SO₄ + N₂ [11]

Some HN03 may have formed by further oxidation of NO and NO2 and/or by the DBD reactor. This can be reacted with ammonia to form ammonium nitrate. Similarly, Sulphuric acid created by the DBD reactor will react with the solution and form ammonium bisulphate and ammonium sulphate.

The process therefore removes S02, NO and NO2 from the gas stream and produces ammonium nitrate and ammonium sulphate and nitrogen. Over time, the ammonium sulphate and ammonium nitrate will concentrate in the aqueous ammonia solution and precipitate out. The solid precipitate can then be removed and used as a fertiliser.

This process is only applicable to low pressure, conventional boiler flue gas clean up, for example from coal fired boilers. The amount of carbon dioxide in flue gases from conventional boilers is typically about 10-15% by volume and so is significantly lower than the amount of carbon dioxide in a flue gas from an oxyfuel combustion process. Flue gases from conventional boilers additionally comprise a large quantity of inert nitrogen. A large post combustion CO2 capture system is needed to remove the CO2 from the flue gas prior to venting. Finally, the EBD reactor used in the preferred arrangement is energy intensive.

The present invention has been made with the above points in mind.

According to the present invention, a method of removing nitrogen oxides and sulphur oxides from a flue gas emitted by an oxyfuel combustion process comprises the steps of:
(i) supplying a flue gas from an oxyfuel combustion process, the flue gas comprising nitrogen oxides and sulphur oxides contaminants;
(ii) oxidising nitric oxide present in the flue gas to form nitrogen dioxide;
(iii) contacting the flue gas with a solution comprising water and ammonia to produce ammonium sulphate, ammonium nitrate and an exhaust gas substantially free of nitrogen oxides and sulphur oxides; and
(iv) separating the exhaust gas, the ammonium sulphate and the ammonium nitrate produced in step (iii) from the solution comprising water and ammonia.

The invention allows NOx and SOx impurities to be removed from the flue gas, whilst producing an exhaust gas which has a high carbon dioxide concentration and so needs little additional processing to be used in enhanced oil recovery applications or simply to be prepared for storage. Additionally, the NOx and SOx contaminants can be removed as a useful side product, since ammonium nitrate and ammonium sulphate can be used as a fertiliser. Further, this side product is easily separated from the solution comprising water and ammonia as it is in the form of a precipitate.

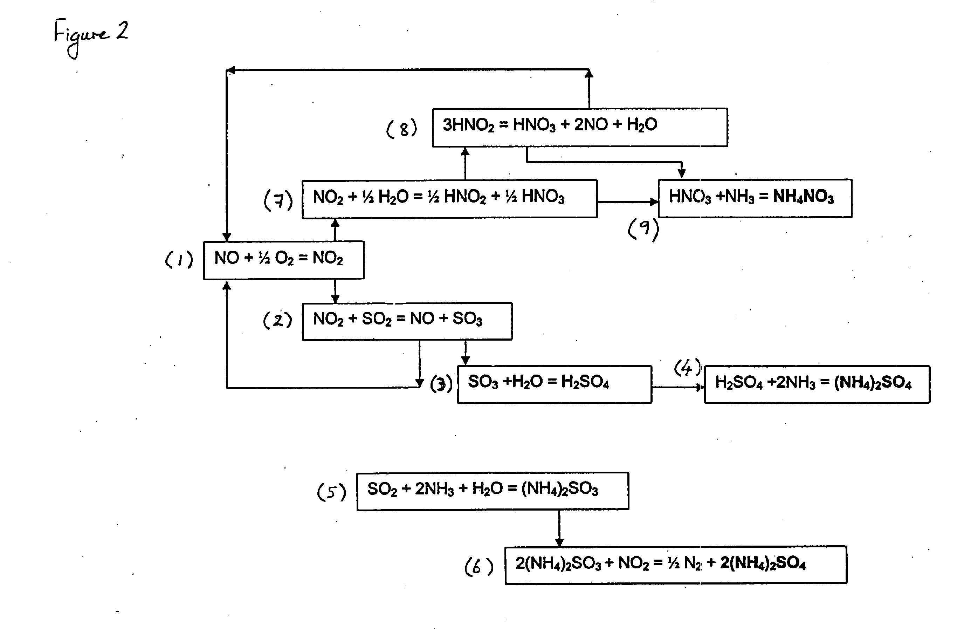

The reaction mechanisms understood to arise are set out in Figure 2. Reaction [1] arises during step (ii), which can then allow reaction [2] to proceed, but the remaining reactions occur when the flue gas comes into contact with water and ammonia, in step (iii).

The flue gas typically comprises at least 75% by volume carbon dioxide, sometimes at least 85% or 90%.

The solution comprising water and ammonia can also comprise other species as a consequence of the solution contacting the flue gas. For example, the solution may also comprise nitric, nitrous and/or sulphuric acids, particularly if the solution is recirculated.

Advantageously, the pH of the solution comprising water and ammonia is maintained above 7, for example above 8, during step (iii). Maintaining the pH at a relatively high level has been found to be particularly beneficial since it ensures that the ammonia reacts with the NOx/SOx impurities preferentially over the carbon dioxide in the flue gas. Since the concentration of carbon dioxide in the flue gas is so high, reaction of the ammonia with the carbon dioxide to form ammonium carbonate could result in significant quantities of ammonium carbonate deposits, which could cause blockages of the processing equipment. This problem can be avoided by ensuring a high pH, to inhibit reaction of the ammonia with carbon dioxide.

It has been found that, rather than providing only sufficient ammonia in the solution comprising water and ammonia to react with the sulphuric and nitric acids, excess ammonia can be provided in the solution. By excess, it is meant that significantly more ammonia is present in the solution than is required in the reactions to produce ammonium sulphate and ammonium nitrate. Rather than the large quantities of ammonia reacting with the large quantities of carbon dioxide present, the level of ammonia ensures a high pH which in turn actually inhibits ammonium carbonate formation.

Step (iii) can be carried out in a contacting vessel, such as a counter-current gas/liquid contacting column. Not only does this permit good contact between the gas and the liquid phases, but it also provides an extended length of time in which the two phases can contact each other, i.e. a residence time. The residence time can be up to 60 seconds, for example between 2 and 20 seconds. This allows the time for the reaction mechanisms set out in Figure 2 to occur.

Optionally, the solution comprising water and ammonia may be fed into the contacting vessel, for example by spraying, near the top of the contacting vessel. Optionally, there may be multiple feed points for introducing the solution into the contacting vessel, the feed points being vertically separated. For example, as well as near the top of the contacting vessel, there may be a feed point around the centre or near the bottom of the contacting vessel. In this way, as ammonia is used up in the reactions, a supply of ammonia is provided to multiple points in the contacting vessel, thereby ensuring a relatively even distribution of ammonia and a more even pH throughout the vessel. With only a single ammonia inlet near the top of the contacting vessel, the ammonia is used up as the solution travels down the vessel, and so the pH near the bottom of the vessel can be lower than the pH near the top.

In a preferred embodiment, step (ii) includes compressing the flue gas to a pressure of at least 3 bara, more preferably to a pressure of at least 10 bara, such as 15 bara or 20 bara, in the presence of excess oxygen, thereby causing the oxidation of NO to N02. This is because a high pressure favours the right hand side of reaction [1] above. In this embodiment, the contacting vessel is also preferably pressurised to the same pressure.

Maintaining a high pressure can also help to counteract the volatility of ammonia, thereby avoiding ammonia aerosols in the exhaust gas. Accordingly, the method may be carried out with no ammonia aerosol removal step. For example, a WESP or the like may not be needed.

The method may include the additional step of cooling the flue gas before step (iii).
This further favours the right hand side of reaction [1]. The lower the temperature the better, since the rate of oxidation of NO to NO2 increases with any reduction in temperature. However, typically, the flue gas may be cooled to 20°C or less, 10°C or less, or even 5°C or less. For example, cooling by heat exchange with sea water can achieve a flue gas temperature of 20°C, or a mechanical chilling device can be used to achieve lower temperatures.

In another embodiment, step (ii) may include passing the flue gas through an electric barrier discharge (EBD) reactor to oxidise the NO to NO2, as discussed in WO 03/050039. This does not require an excess of oxygen and so the concentration of oxygen in the flue gas may be lower.

Alternatively, two or more of the techniques described above for oxidising nitric oxide to nitrogen dioxide can be used in combination. For example, the oxidising step may include the combination of one or more of compressing the flue gas, cooling the flue gas and passing the flue gas through an EBD reactor. Combining the use of an EBD reactor with one or more of the above-mentioned techniques would reduce the power needed by the reactor. As an example, an EBD reactor can be used in combination with compressing the flue gas to oxidise any NO not already oxidised following the EBD reactor.

The ammonium nitrate and ammonium sulphate produced in step (iii) are produced as precipitates and so known techniques for separating solids, liquids and gases can be used in step (iv). For example, the exhaust gas can be allowed to exit the contacting vessel through an outlet at the top of the vessel, whilst the liquid and precipitate can be drawn off from the bottom of the contacting vessel. The liquid and precipitate, or a portion thereof, can then be treated to separate the two phases, for example in a settling tank, clarifier or filter. The liquid phase can be recirculated and fed back to the contacting vessel in step (iii).

Optionally, the exhaust gas produced in step (iv) can be compressed to a pressure of at least 100 bara, often at least 150bara. This pressurised exhaust gas can then be fed to a pipeline for use in enhanced oil recovery or merely for transfer to a storage facility.

The present invention will now be described, by way of example only, with reference to the accompanying drawings, in which:
Figure 1 is a flow chart showing the method of the present invention;
Figure 2 shows the reaction mechanisms believed to occur in the method of the invention; and
Figure 3 is a schematic of an assembly which can be used in the method of the invention.

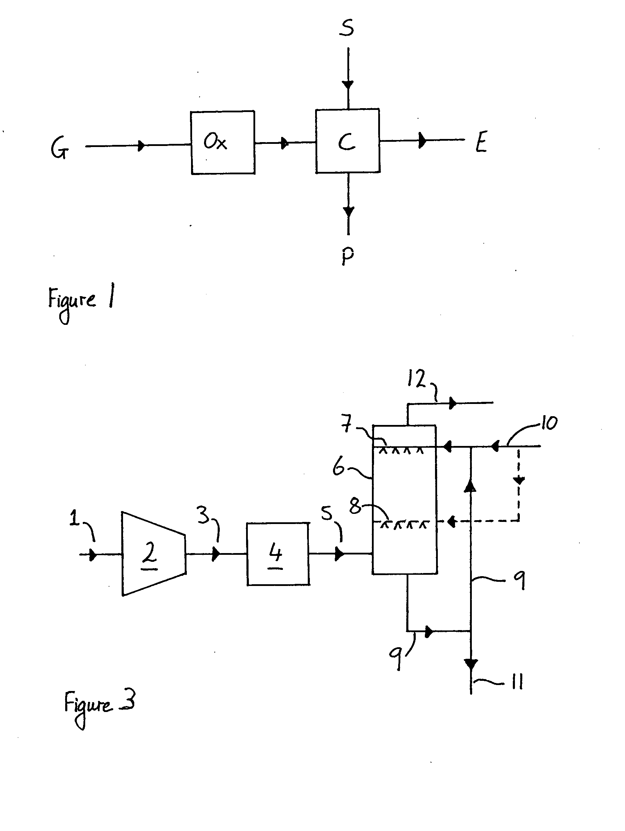

Figure 1 depicts the steps of the method of the present invention. A flue gas (G) from an oxyfuel combustion process such as an oxyfuel pulverised coal-fired power station (not shown) is fed to an oxidising step (Ox.). The flue gas comprises over 85% carbon dioxide (by volume) as well as other components such as oxygen, water, argon and nitrogen, and impurities such as nitric oxide, nitrogen dioxide, sulphur dioxide and possibly sulphur trioxide and mercury. As a consequence of the oxidising step, nitric oxide in the flue gas is oxidised to nitrogen dioxide. The flue gas is allowed to contact a solution (S) comprising water and ammonia in a contacting step (C). During this contacting step, a number of reactions occur and result in the removal of nitric oxide, nitrogen dioxide, sulphur dioxide and sulphur trioxide from the flue gas in the form of ammonium nitrate and ammonium sulphate precipitates (P), and the flue gas emerges as a clean exhaust gas (E) substantially free of nitrogen oxides and sulphur oxides.

The reaction mechanisms will now be described in more detail. As discussed above, oxidation of nitric oxide to nitrogen dioxide as set out in reaction (1) occurs as a result of the oxidising step. Accordingly, when the flue gas comes into contact with the solution comprising water and ammonia, the gas comprises carbon dioxide, nitrogen dioxide, sulphur dioxide and possibly nitric oxide and sulphur trioxide as described in more detail below.

The sulphur dioxide is removed preferentially over the nitrogen dioxide. This is because there are two reaction mechanisms which can operate immediately to remove sulphur dioxide, one of which involves a very fast reaction (reaction [2]) and so occurs in preference to the mechanism for removing nitrogen dioxide, which is a slower reaction. A second one of the mechanisms for removing sulphur dioxide involves direct reaction of the sulphur dioxide with ammonia and water, whereas nitrogen dioxide cannot be removed directly by reaction with ammonia.

The first mechanism for removing sulphur dioxide is set out in reactions [2], [3] and [4]. Sulphur dioxide reacts rapidly with nitrogen dioxide to produce nitric oxide and sulphur trioxide. The sulphur trioxide then reacts with water to form sulphuric acid, which in turn reacts with ammonia to produce ammonium sulphate which can precipitate out.

The second mechanism for removing sulphur dioxide is set out in reactions [5] and [6], and commences with sulphur dioxide reacting directly with ammonia and water to produce ammonium sulphite. The ammonium sulphite subsequently reacts with nitrogen dioxide to produce nitrogen and further ammonium sulphate.

Although some nitrogen dioxide is removed from the flue gas in reaction [6], twice as much sulphur dioxide is removed via reactions [5] and [6], and further sulphur dioxide is removed via reactions [2-4]. Accordingly, sulphur dioxide is removed faster than nitrogen dioxide.

When the sulphur dioxide has been removed, reaction [7] occurs. Nitrogen dioxide reacts with water to produce nitrous acid and nitric acid. The nitrous acid decomposes into nitric acid, nitric oxide and water in reaction [8]. The nitric acid is reacted with ammonia in reaction [9] to form ammonium nitrate which can precipitate out.

Accordingly, by contacting the oxyfuel flue gas with a solution comprising water and ammonia, it is believed that the removal of impurities (NOx and SOx) can be achieved with increased speed and simplicity, particularly with respect to the separation of the products, when compared with the method taught in US 2007/0122328.

A preferred embodiment of the present invention will now be described in connection with Figure 3. A conduit (1) is provided for feeding a flue gas from an oxyfuel combustion process such as an oxyfuel pulverised coal-fired power station (not shown) to a compressor (2). The pressure in the conduit may be just below atmospheric pressure. The flue gas comprises approximately 75% by volume of carbon dioxide as well as oxygen; nitric oxide, nitrogen dioxide, sulphur dioxide and possibly sulphur trioxide.

The compressor increases the pressure of the flue gas to about 15 bara. At this elevated pressure, the equilibrium of reaction [1] leans to the right and so these conditions allow NO2 to be produced at a relatively fast rate. The flue gas is then passed via conduit (3) to a cooling device (4), which can be a heat exchanger for example. The cooling device (4) reduces the temperature of the flue gas, which further pushes reaction [1] to the right. The cooled, compressed flue gas is then passed via conduit (5) to a contacting vessel (6) which can be a counter-current gas/liquid contacting column which can have a packing within the column. Such columns are well known in the art.

The flue gas is introduced into the vessel (6) near the bottom of the vessel. A solution comprising water and ammonia is introduced into the vessel near the top of the vessel, via a plurality of spray heads (7). An additional set of spray heads (8) (shown in Figure 3 in dashed lines) may also be provided for introducing a solution comprising water and ammonia near the bottom of the vessel (i.e. upstream of the first set of spray heads (8), in terms of the direction of flow of the flue gas). The water and ammonia solution is circulated from the bottom of the vessel, through circulation line (9) to the spray heads (7,8) using a pump (not shown). A fresh solution comprising water and ammonia can be fed into the vessel via the inlet conduit (10) which can be controlled to feed the spray heads (7) near the top of the vessel and, where present, the spray heads (8) near the bottom of the vessel. A branch (11) is provided in the circulation line so that part or all of the - solution, including any ammonium sulphate and ammonium nitrate precipitate, withdrawn from the bottom of the vessel (6) can be drawn off for further processing as discussed below.

An outlet is provided at the top of the vessel (6) to allow cleaned exhaust gas to flow into and along exhaust conduit (12).

Pressurising and cooling the flue gas before it passes into the contacting vessel (6) means that the oxidation of nitric oxide to nitrogen dioxide occurs quickly in the contacting vessel. The rate of flow of gas through the contacting vessel is slow enough to provide the gas with a residence time of between 2 and 20 seconds in the vessel. In this way, there is sufficient time for the oxidation step as well as for the rest of the reactions to occur in the contacting vessel.

Although a significant proportion of the nitric oxide is oxidised to nitrogen dioxide in the contacting vessel (6), some oxidation may arise in the conduit (5) and even in the conduit (3). This is because the flue gas in conduit (5) is also at a high pressure and low temperature, and the flue gas in conduit (3) is pressurised. However, residence time of the flue gas in the conduits (3,5) is low and so little oxidation arises here. Further, the rate of oxidation will be less in conduit (3) since the temperature of the gas is higher in conduit (3) than in the contacting vessel (6).

The reactions [2-9] can then take place in the contacting vessel, as discussed above.

The contacting vessel (6) is pressurised to about 15 bara. Accordingly, nitric oxide produced in reactions [2] and [8] is oxidised relatively quickly to nitrogen dioxide, as depicted in Figure 2 by the arrows returning from those reactions to reaction [1].

As mentioned above, the solution comprising ammonia and water is circulated through the contacting vessel and through circulation line (9). Accordingly, species produced in the reactions [2-9] can exist in the circulating solution. For example, the circulating solution can also comprise sulphuric acid, nitric acid and nitrous acid which has not yet reacted with ammonia.

The pH of the solution is maintained between about 8 and 12 by providing an excess of ammonia in the water and ammonia solution. The ammonia is in sufficient excess such that the pH of the solution does not alter significantly as a result of ammonia being used up in the reactions. Any variation in pH as a result of the ammonia being used up can be counter balanced by spraying additional ammonia into the vessel via the additional spray heads (8). This is important to avoid precipitation of ammonium carbonate. Due to the high concentration of carbon dioxide in the flue gas, and the elevated pressure of the flue gas, the partial pressure of carbon dioxide is very high. In fact, the amount of carbon dioxide and the amount of ammonia used in the method significantly exceed the amount of nitric oxide, nitrogen dioxide, sulphur dioxide and sulphur trioxide present. It is therefore important to suppress a reaction between ammonia and carbon dioxide, and this is achieved by maintaining the pH in the region between 8 and 12.

A portion of the solution drawn from the contacting vessel through line (9) is taken off by branch (11). The solution taken off through branch (11) contains ammonia solution as well as ammonium sulphate and nitrate precipitates. The solution is passed into a clarifier (or other similar technique) to separate out the solids, which can then be dried.
The clarified liquid is then returned to the contacting vessel.

Pre-treatment or post-treatment of the flue gas/exhaust gas may be included.
Various treatments are known in the art and may include pre-treatment to remove water soluble components or particulates such as liquefying the CO2 and removing the non-condensable vapours such as oxygen, nitrogen and argon.

## Claims

1. A method of removing nitrogen oxides and sulphur oxides from a flue gas emitted by an oxyfuel combustion process comprising the steps of:
(i) supplying a flue gas from an oxyfuel combustion process, the flue gas comprising nitrogen oxides and sulphur oxides contaminants;
(ii) oxidising nitric oxide present in the flue gas to form nitrogen dioxide;
(iii) contacting the flue gas with a solution comprising water and ammonia to produce ammonium sulphate, ammonium nitrate and an exhaust gas substantially free of nitrogen oxides and sulphur oxides; and
(iv) separating the exhaust gas, the ammonium sulphate and the ammonium nitrate produced in step (iii) from the solution comprising water and ammonia.

2. The method of claim 1, in which the pH of the solution comprising water and ammonia is maintained above 8 during step (iii).

3. The method of claim 2, in which the amount of ammonia in the solution comprising water and ammonia is in excess of the amount needed to form the ammonium sulphate and ammonium nitrate, so as to maintain the pH of the solution above 8.

4. The method of any one of the preceding claims, in which step (iii) is carried out in a contacting vessel.

5. The method of claim 4, in which the solution comprising ammonia and water is introduced into the contacting vessel at multiple vertically separated feed points including a feed point near the top of the contacting vessel.

6. The method of any one of the preceding claims, in which step (ii) includes compressing the flue gas to a pressure of at least 3 bara, preferably to a pressure at least 15 bara, in the presence of excess oxygen, thereby causing the oxidation of NO to N02.

7. The method of claim 6, in which step (ii) further comprises the additional step of cooling the flue gas.

8. The method of claim 6 or claim 7, in which there is no ammonia aerosol removal step.

9. The method of any one of the preceding claims, in which step (ii) includes passing the flue gas through an electric barrier discharge reactor to oxidise NO to N02.

10. The method of any one of the preceding claims, in which the exhaust gas produced in step (iv) is compressed to a pressure of at least 100 bara.
